# EUROPÄISCHE PATENTANMELDUNG

(11) **EP 3 196 539 A1**
(43) Veröffentlichungstag der Anmeldung: **26.07.2017**
(21) Anmeldenummer: 17159415.3
(22) Anmeldetag: 15.12.2005
(51) Int. Cl.: F21S 8/00, G02B 6/00, F21W 101/02, F21Y 115/10

(54) **LEUCHTVORRICHTUNG MIT MEHREREN HALBLEITERLICHTQUELLEN**

(30) Priorität: 30.12.2004 DE 102004063574
(62) Teilanmeldung aus: 05027536.1
(71) Anmelder: Osram Opto Semiconductors Gmbh, 93055 Regensburg (DE)
(72) Erfinder: Hofmann, Markus, 93077 Bad Abbach (DE); Wanninger, Mario, 93055 Regensburg (DE); Wilm, Alexander, 93059 Regensburg (DE); Waitl, Günter, 93049 Regensburg (DE)
(74) Vertreter: Epping - Hermann - Fischer

(57) **Zusammenfassung**

Die Erfindung betrifft eine Leuchtvorrichtung mit mehreren Halbleiterlichtquellen (7), die auf einem Träger (6) angeordnet sind, wobei das Licht der Lichtquellen jeweils in eine zugeordnete Umlenkoptik (1) einkoppelt und die Umlenkoptiken mit Reflexions- und Lichtaustrittsflächen versehen sind, derart, dass die Einhüllende der Lichtauskoppelflächen ein gekrümmtes Flächensegment bildet.

## Beschreibung

Die Erfindung betrifft eine Leuchtvorrichtung mit mehreren Halbleiterlichtquellen, die auf einem Träger angeordnet sind.

Leuchtvorrichtungen, insbesondere für Signalleuchten, wurden bisher auf unterschiedlichste Art und Weise realisiert. Für Dreheffekte, wie solchen in Blaulichtern oder Orangelichtern auf Fahrzeugdächern wurde bisher hauptsächlich eine konventionelle Glühbirne mit einem beigeordneten Reflektor, der durch einen Motor in Rotation versetzt wurde, eingesetzt. Der Reflektor dient dabei zur Strahlformung. Eine solche Vorrichtung ist aufwändig und störanfällig.

Mittlerweile gibt es verschiedene Lösungen für Signalleuchten mit Blink- und Dreheffekten, bei denen zur Lichterzeugung lichtemittierende Dioden (LEDs) verwendet werden.

Aus der Druckschrift WO 02/066889 A1 ist zum Beispiel eine Signalleuchte auf LED-Basis bekannt. Bei dieser Signalleuchte sind LEDs auf Platinen angeordnet, die Platinen selbst sind dann ringförmig zu einem Leuchtkörper angeordnet. Der Vorteil einer solchen Signallampe mit LEDs liegt darin, dass Dreh- und Blinkeffekte durch eine elektronische Ansteuerung der einzelnen Leuchtdioden erreicht werden können, ohne dass für Dreheffekte die mechanische Rotation eines Teils der Leuchtvorrichtung notwendig wäre. Ein weiterer Vorteil der Verwendung von Leuchtdioden besteht in ihrer langen Betriebsdauer und geringen Wartungsnotwendigkeit.

In der Druckschrift US 5,806,965 ist eine Anordnung beschrieben, bei der die Leuchtdioden auf einer gekrümmten Oberfläche angebracht werden.

Bei der Anordnung der Leuchtdioden auf gekrümmten Oberflächen kann nicht auf eine der herkömmmlich verwendeten Standardbestückungstechniken, die für ebene Platinen ausgelegt sind, zurückgegriffen werden. Im Falle der Anordnung ebener Platinenstücke in einer gekrümmten Oberflächenform wird eine aufwendige Verdrahtung der einzelnen Platinenstücke notwendig. Dadurch wird ein größerer Aufwand bedingt und es entstehen höhere Kosten.

Der vorliegenden Erfindung liegt insbesondere die Aufgabe zugrunde, eine Leuchtvorrichtung der eingangs genannten Art anzugeben, die in kostengünstiger Weise eine Verbesserung ermöglicht.

Diese Aufgabe wird unter anderem durch eine Leuchtvorrichtung mit den Merkmalen des Patentanspruchs 1 oder eine Leuchtvorrichtung gemäß Aspekt 1 gelöst. Vorteilhafte Weiterbildungen der Erfindung sind Gegenstand der abhängigen Ansprüche und weiteren Aspekte.

Erfindungsgemäß ist vorgesehen, mehrere Halbleiterlichtquellen wie Leuchtdioden (LEDs), organische LEDs oder Laser auf einem vorzugsweise ebenen Träger anzuordnen. Halbleiterlichtquellen umfassen auch strahlungsemittierende Chips, die in on-board Technik auf einer Platine angeordnet sind, sowie alle Arten von strahlungsemittierenden Halbleiterstrukturen, inklusive Halbleiterstrukturen, deren Emission außerhalb des visuellen Spektrums liegt. Für eine Signalleuchte ist eine unmittelbar sichtbares Licht emittierende Halbleiterlichtquelle jedoch von besonderem Vorteil.

Eine LED ist als Halbleiterlichtquelle besonders geeignet. Vorzugsweise umfasst die LED einen auf einem III-V-Verbindungshalbleitermaterial basierenden Halbleiterchip. Mittels III-V-Verbindungshalbleitermaterialien kann, insbesondere im sichtbaren Spektralbereich, Licht besonders effizient erzeugt werden.

Eine Anordnung der Halbleiterlichtquellen auf dem Träger, insbesondere auf einem für alle Halbleiterlichtquellen gemeinsamen ebenen Träger, etwa einer Platine, kann dabei mit herkömmlichen Standard-Montageprozessen durchgeführt werden. Ein oberflächenmontierbares (SMD: Surface Mountable Device) LED-Bauelement kann dabei vorteilhafterweise besonders einfach und platzsparend auf dem Träger angeordnet werden. SMD-LED-Bauelemente erleichtern eine kompakte Ausführung der Leuchtvorrichtung.

Das Licht der Halbleiterlichtquellen koppelt in eine Umlenkoptik ein. Die Umlenkoptik erfüllt neben ihrer Umlenkfunktion gleichzeitig eine Lichtleiterfunktion (Umlenklichtleiter). Hierbei verteilt die Umlenkoptik das von der Halbleiterlichtquelle eingekoppelte Licht als Umlenklichtleiter bevorzugt weitgehend gleichmäßig auf eine Lichtauskoppelfläche der Umlenkoptik. Durch die Umlenkoptik wird das Licht in der gewünschten Abstrahlrichtung ausgekoppelt und emittiert. Dies erfolgt insbesondere in eine einen vorgegebenen Winkel mit dem Träger einschließende Richtung, z.B. in eine Richtung parallel zum Träger. Bevorzugt ist jeweils einer Halbleiterlichtquelle eine, vorzugsweise genau eine, Umlenkoptik zugeordnet, wodurch eine präzise Umlenkung des in einzelnen Lichtquellen erzeugten Lichts in eine vorgegebene Richtung erleichtert wird.

Die Umlenkoptik weist bevorzugt einen derart ausgebildeten Reflektor auf, dass er das Licht in Richtung der Lichtauskoppelfläche lenkt. Vorzugsweise lenkt der Reflektor das Licht direkt auf die Lichtauskoppelfläche, welche bevorzugt durch eine Oberfläche der Umlenkoptik gebildet ist.

Die Anordnung und Ausgestaltung der Reflektoren und der Lichtauskoppelflächen der Umlenklichtleiter bestimmt dabei die Lichtemission der Vorrichtung, insbesondere deren Abstrahlcharakteristik. Durch die Verwendung mehrerer vorzugsweise diskreter Umlenklichtleiter kann in vorteilhafter Weise eine Lichtabstrahlung von bis zu 360° rund um die Leuchtvorrichtung erreicht werden. Über geeignete Ansteuerung der einzelnen Halbleiterlichtquellen können mittels der Leuchtvorrichtung Blink- oder Dreheffekte erzeugt werden.

Der Reflektor ist bevorzugt eine an der Umlenkoptik ausgebildete oder angeordnete Reflexionsfläche. Vorzugsweise ist die Reflexionsfläche eine Oberfläche der Umlenkoptik, insbesondere des Lichtleiters. Die Reflexionsfläche kann, beispielsweise über geeignete Strukturierung mit einer Reflektorstruktur totalreflektierend für aus einer vorgegebenen Richtung, z.B. aus Richtung der Halbleiterlichtquelle, auf die Reflexionsfläche treffendes Licht ausgeführt sein. Hierfür eignet sich beispielsweise eine Zackenstruktur oder eine geriffelte Struktur. Alternativ oder zusätzlich kann die Reflexionsfläche mit einem reflexionssteigernden Material, z.B. einer Metallschicht, beschichtet sein.

Bei einer bevorzugten Ausgestaltung der Umlenkoptik verringert sich der Abstand zwischen deren Lichtaustrittsfläche und deren Reflexionsfläche mit zunehmendem Abstand von einer der Umlenkoptik zugeordneten Halbleiterlichtquelle bzw. mit zunehmendem Abstand von deren Lichteintrittsfläche. Dies wird auf technisch vorteilhafte Weise dadurch erreicht, dass sich die Umlenkoptik im Verlauf von der Halbleiterlichtquelle bzw. vom Träger weg verjüngt. Eine derartige Ausführung der Umlenkoptik ermöglicht auf technisch einfache Weise eine weitgehend homogene, sprich gleichmäßige Ausleuchtung der Lichtaustrittsfläche der Umlenkoptik und damit eine weitgehend homogene Abstrahlung der Leuchtvorrichtung.

Bevorzugt schließen eine Haupterstreckungsrichtung der Lichtaustrittsfläche der Umlenkoptik und eine Haupterstreckungsrichtung der Reflexionsfläche der Umlenkoptik einen spitzen Winkel ein. Dieser ist bevorzugt kleiner als 45°, besonders bevorzugt kleiner als 25°. Eine gerichtete Reflexion von Licht in der Umlenkoptik auf deren Lichtaustrittsfläche wird so erleichtert.

In Emissionsrichtung der Umlenkoptik gesehen überlappen die Reflexionsfläche und die Lichtaustrittsfläche der Umlenkoptik teilweise, bevorzugt vollständig, wodurch eine weitgehend homogene Ausleuchtung der Lichtaustrittsfläche auf technisch vereinfachte Weise verwirklicht werden kann.

Bei einer weiterhin bevorzugten Ausgestaltung überlappen die Reflexionsfläche und die Halbleiterlichtquelle. Besonders bevorzugt überlappen die Reflexionsfläche und die Halbleiterlichtquelle vollständig. Auf diese Weise lässt sich technisch vergleichsweise einfach sicherstellen, dass von der Halbleiterlichtquelle erzeugtes Licht im wesentlichen vollständig auf die Reflexionsfläche trifft. Dies ist für die Homogenität der Ausleuchtung der Lichtaustrittsfläche, die bevorzugt überwiegend oder vollständig mittels auf die Lichtaustrittsfläche gerichteter Reflexion an der Reflexionsfläche erreicht wird, von Vorteil.

Die Lichtaustrittsfläche und/oder die Reflexionsfläche kann gekrümmt oder in ihrem grundsätzlichen Verlauf, d.h. insbesondere abgesehen von einer vorgesehenen Reflektorstruktur, eben ausgeführt sein.

Ist die Lichtaustrittsfläche eben ausgeführt, so ist auch die Reflexionsfläche bevorzugt in ihrem grundsätzlichen Verlauf eben ausgeführt. Ist die Lichtaustrittsfläche gekrümmt ausgeführt, so ist auch die Reflexionsfläche bevorzugt gekrümmt ausgeführt. Ist die Lichtaustrittsfläche von außerhalb der Umlenkoptik gesehen konvex (konkav) gekrümmt ausgeführt, so ist die Reflexionsfläche bevorzugt von außerhalb der Umlenkoptik gesehen konkav (konvex) gekrümmt ausgeführt.

Eine homogene Ausleuchtung der Lichtaustrittsfläche und in der Folge ein homogenes Abstrahlen der Leuchtvorrichtung kann mittels verschiedenartiger, insbesondere aneinander angepasster Krümmungen von Lichtaustrittsfläche und Reflexionsfläche oder einer ebenen Ausführung von Reflexionsfläche und Lichtaustrittsfläche vereinfacht erzielt werden.

In einer bevorzugten Ausgestaltung ist die Lichtaustrittsfläche einer ersten Umlenkoptik, insbesondere vom Träger aus gesehen, oberhalb der Lichtaustrittsfläche einer zweiten Umlenkoptik angeordnet. Diese Umlenkoptiken sind bevorzugt verschiedenen Halbleiterlichtquellen zugeordnet. Die zweite Umlenkoptik ist dabei bevorzugt einer Halbleiterlichtquelle zugeordnet, die näher an einem Rand des Trägers angeordnet ist, als eine Halbleiterlichtquelle, der die erste Umlenkoptik zugeordnet ist. Die erste Umlenkoptik übergreift bevorzugt die zweite Umlenkoptik. Besonders bevorzugt schließen die Lichtaustrittsflächen der beiden Umlenkoptiken im wesentlichen bündig miteinander ab. Eine homogene Abstrahlung der Leuchtvorrichtung wird auf diese Weise vereinfacht. Die beiden Halbleiterlichtquellen sind bevorzugt zur Erzeugung verschiedenfarbigen Lichts geeignet, so dass aus den Lichtaustrittsflächen verschiedener Umlenkoptiken verschiedenfarbiges Licht auskoppeln kann.

Ferner ist der Abstand der Lichtaustrittsfläche der einer Halbleiterlichtquelle zugeordneten ersten Umlenkoptik vom Träger bevorzugt größer als derjenige der Lichtaustrittsfläche einer zweiten Umlenkoptik, die einer weiteren, näher am Trägerrand angeordneten Halbleiterlichtquelle zugeordnet ist. Die beiden Halbleiterlichtquellen sind bevorzugt nebeneinander, insbesondere in radialer Richtung, auf dem Träger angeordnet.

Die zweite Umlenkoptik, deren Lichtaustrittsfläche näher am Träger angeordnet ist, ist bevorzugt auf ihrer dem Träger abgewandten Seite abgeflacht ausgeführt, so dass eine erste Umlenkoptik auf dem abgeflachten Bereich aufliegen oder dort befestigt werden kann. Die aufzulegende oder zu befestigende Umlenkoptik ist hierzu zweckmäßigerweise an ihrer dem Träger zugewandten Seite abgeflacht ausgeführt.

Bevorzugt kann der Träger der Halbleiterlichtquellen als herkömmliche Leiterplatte oder Platine ausgeführt sein. In beispielhafter Weise seien hier genannt FR4-, FR2-, Metallkern- und CEM1-Träger oder andere, auch flexible Platinen.

Vorzugsweise ist eine Steuerung mit auf dem Träger angeordnet. Dazu kann mindestens ein Steuerungschip mit integrierten Schaltungen in einem Standardverfahren auf dem Träger aufgebracht sein.

In bevorzugter Weise stellt die Einhüllende der Lichtauskoppelflächen der Umlenkoptiken bezüglich der Lichtaustrittsrichtung ein nach außen gekrümmtes Flächensegment dar. Dadurch läßt sich eine Ausleuchtung des die Leuchtvorrichtung umgebenden Raums von bis zu 360° um die Leuchtvorrichtung erreichen.

Vorzugsweise ist der Träger in einer Wanne angeordnet. Bevorzugt bildet sie gemeinsam mit einer transparenten Abdeckung ein Gehäuse. Auf dem Träger befinden sich die Umlenkoptiken in der Abdeckung. Eine transparente Abdeckung kann beispielsweise durch einen Glassturz verwirklicht sein, wie er bei Blaulichtern verwendet wird.

In einer weiteren vorteilhaften Ausführungsform kann die Leuchtvorrichtung nach der Montage in einem Gehäuse komplett vergossen oder fest verschlossen werden.

Bevorzugt können in der Leuchtvorrichtung mehrfarbige Halbleiterlichtquellen wie LEDs, sogenannte Multi-LEDs, gleich- oder verschiedenfarbige LEDs verwendet werden. Über mehr- oder verschiedenfarbige Halbleiterlichtquellen können mehrfarbige Leuchteffekte erzielt werden. An Stelle von einfarbigen Halbleiterlichtquellen verschiedener Farben können vorteilhafterweise mehrfarbige Halbleiterlichtquellen zur Erzeugung von Licht unterschiedlicher Farben oder unterschiedlicher Mischfarben verwendet sein. Eine mehrfarbige LED weist beispielsweise eine Mehrzahl von Halbleiterchips auf, von denen zumindest zwei zur Erzeugung von Licht unterschiedlicher Farbe geeignet sind. Bevorzugt umfasst eine mehrfarbige Halbleiterlichtquelle drei Halbleiterchips die paarweise verschiedenfarbiges Licht, z.B. der Grundfarben Rot, Grün bzw. Blau, erzeugen können.

In einer weiteren bevorzugten Ausführungsform kann das Licht verschiedenfarbiger LED-Lichtquellen oder einer Multi-LED in den Umlenklichtleitern gemischt werden. Dies ermöglicht oder erleichtert das Erzielen mischfarbiger Lichteffekte.

Eine andere bevorzugte Ausführungsform sieht die Ausbildung der Leuchtvorrichtung als Signalleuchte vor. Durch die entsprechende Ansteuerung der Halbleiterlichtquellen sind spezielle Signalleuchtenfunktionen wie Blink- oder Rotationseffekte möglich.

Eine besonders bevorzugte Ausführungsform ermöglicht, die Halbleiterlichtquellen mit einer einstellbaren Frequenz anzusteuern, um einen Rotationseffekt oder einen Blinkeffekt des emittierten Lichtes zu erreichen. Die Erfindung ermöglicht somit ein breites Einsatzspektrum. Sie kann in beispielhafter Weise als Blaulicht bei Einsatzfahrzeugen dienen oder als Blinklicht bei Baustellenfahrzeugen oder Lastwagen. Sie kann an elektrischen Maschinen angeordnet sein, wie sie zum Beispiel in der Fertigung oder am Flughafen verwendet werden, um deren Betriebszustand anzuzeigen. Des Weiteren können solche Signalleuchten auch bei Fahrzeugen als Rückleuchten, als Blinker oder als CHMSL (CHMSL: Center High Mounted Stop Lamp), z.B. für ein drittes Bremslicht, Verwendung finden. Durch die Verwendung verschiedener Signalfolgen oder Blinkfrequenzen können solche Signalleuchten auch für Menschen mit Farbschwäche, z.B. Farbblindheit, eindeutige Signale liefern. Möglich ist auch die Verwendung solcher Signalleuchten für hörgeschädigte Personen, um akustische Signale zu ersetzen.

Eine weitere bevorzugte Ausführungsform der Erfindung sieht vor, dass an dem Umlenklichtleiter oder den Umlenklichtleitern eine kollimierende Optik bzw. kollimierende Optiken im Bereich des Lichteintritts angeordnet sind.

In einer besonders bevorzugten Ausführungsform ist die kollimierende Optik bzw. sind die kollimierenden Optiken einstückig mit dem Umlenklichtleiter oder den Umlenklichtleitern ausgeführt.

Bevorzugt ist die Optik als Stufenlinse ausgeführt. Diese weist ferner bevorzugt einen z. B. gemäß einer asphärischen Linse gekrümmten Zentralbereich auf, der von einer oder einer Mehrzahl von vorzugsweise konfokal angeordneten und/oder ringartig ausgeführten Reflektorflächen umgeben ist. Der Zentralbereich und die Reflektorfläche(n) sind bevorzugt auf der Lichteintrittsseite der Optik ausgebildet. Der gekrümmte Zentralbereich und die Reflektorflächen sind bevorzugt derart ausgebildet und aufeinander abgestimmt, dass das in die Optik eintretende Licht bereits eintrittsseitig kollimiert und z.B. in ein Parallelbündel umgewandelt wird. Auf die Reflexionsfläche der Umlenkoptik treffendes Licht kann so nach einem Lichteintritt in die Umlenkoptik mit vorausgehender Strahlformung durch die kollimierende Optik vereinfacht bereits weitgehend gleichmäßig verteilt und homogen auf die Reflexionsfläche treffen.

Vorzugsweise ermöglicht die Reflexionsfläche des Umlenklichtleiters einen gleichmäßigen Lichtaustritt über die gesamte Lichtaustrittsfläche.

In einer bevorzugten Weiterbildung der Erfindung kann auch ein Teil des Lichts aus dem Umlenklichtleiter an der der Einkopplungsfläche gegenüberliegenden Seite ausgekoppelt werden.

Die Leuchtvorrichtung kann sich insbesondere durch mindestens einen der folgenden Aspekte auszeichnen, welche zur vereinfachten Darstellung nummeriert und mit Rückbezügen versehen sind.
1. Leuchtvorrichtung mit mehreren Halbleiterlichtquellen die auf einem Träger angeordnet sind, wobei das Licht der Lichtquellen unter einem vorgegebenen Winkel zur Flächennormalen des Trägers in zugeordnete Lichtleiter einkoppelt und diese mit Reflexions- und Lichtaustrittsflächen versehen sind, derart, dass die Einhüllende der Lichtaustrittsflächen ein gekrümmtes Flächensegment bildet.
2. Vorrichtung nach Aspekt 1,
   dadurch gekennzeichnet, dass
   der Träger eine ebene Platine ist.
3. Vorrichtung nach einem der vorangegangen Aspekte dadurch gekennzeichnet, dass
   eine Steuerung der Halbleiterlichtquellen auf dem Träger angeordnet ist.
4. Vorrichtung nach einem der vorangegangenen Aspekte
   dadurch gekennzeichnet, dass
   die Einhüllende der Lichtaustrittsflächen
   bezüglich der Lichtaustrittsrichtung ein nach außen gekrümmtes Flächensegment ist.
5. Vorrichtung nach einem der vorangegangenen Aspekte
   dadurch gekennzeichnet, dass
   die Vorrichtung in einer Wanne angeordnet ist, die zusammen mit einer transparenten Abdeckung ein Gehäuse bildet.
6. Vorrichtung nach einem der vorangegangenen Aspekte
   dadurch gekennzeichnet, dass
   die Vorrichtung nach der Montage in einem Gehäuse vergossen oder verschlossen ist.
7. Vorrichtung nach einem der vorangegangenen Aspekte
   dadurch gekennzeichnet, dass
   in der Vorrichtung MultiLEDs oder verschiedenfarbige LEDs angeordnet sind.
8. Vorrichtung nach einem der vorangegangenen Aspekte

   dadurch gekennzeichnet, dass
   das Licht verschiedenfarbiger Lichtquellen im Lichtleiter gemischt ist.
9. Vorrichtung nach einem der vorangegangenen Aspekte dadurch gekennzeichnet, dass
   die Vorrichtung eine Ansteuerung der Halbleiterlichtquellen enthält, welche Blink- oder Rotationseffekte erzeugt.
10. Vorrichtung nach einem der vorangegangenen Aspekte
   dadurch gekennzeichnet, dass
   einer Lichteinkoppelungsfläche eines der Lichtleiter eine kollimierende Optik zugeordnet ist.
11. Vorrichtung nach Aspekt 10,
   dadurch gekennzeichnet, dass
   die kollimierende Optik einstückig mit dem Lichtleiter ausgeführt ist.
12. Vorrichtung nach einem der vorangegangenen Aspekte
   dadurch gekennzeichnet, dass
   die Reflexionsflächen angeordnet sind, um einen gleichmäßigen Lichtaustritt über die gesamten Lichtaustrittsflächen zu bewirken.
13. Vorrichtung nach einem der vorangegangenen Aspekte
   dadurch gekennzeichnet, dass
   ein Teil des in den Lichtleiter eingekoppelten Lichts durch eine Auskoppelungsfläche ausgekoppelt wird, die der Einkopplungsfläche mit Bezug auf die Lichteintrittsrichtung gegenüberliegt.
14. Vorrichtung nach einem der vorangegangenen Aspekte
   dadurch gekennzeichnet, dass
   die Halbleiterlichtquellen mit einer einstellbaren Frequenz angesteuert werden, um einen Blinkeffekt zu erzielen.
15. Vorrichtung nach einem der vorangegangenen Aspekte
   dadurch gekennzeichnet, dass
   die Halbleiterlichtquellen mit einer einstellbaren Frequenz angesteuert werden, um einen Dreheffekt zu erzielen.
16. Vorrichtung nach einem der vorangegangenen Aspekte dadurch gekennzeichnet, dass
   der Lichtleiter ein Wellenlängen konvertierendes Material enthält.
17. Signalleuchte mit einer Leuchtvorrichtung gemäß einem der vorangegangenen Aspekte.

Weitere Merkmale, Vorzüge und Zweckmäßigkeiten der Erfindung ergeben sich aus den nachfolgend in Verbindung mit den Figuren 1 bis 5 erläuterten Ausführungsbeispielen.

Es zeigen:
Figur 1 eine schematische Querschnittsdarstellung eines Umlenklichtleiters,
Figur 2 perspektivische Darstellungen eines Umlenklichtleiters,
Figur 3 ein Ausführungsbeispiel für eine erfindungsgemäße Leuchtvorrichtung,
Figur 4 eine perspektivische Darstellung einer Basiseinheit für die Leuchtvorrichtung mit Darstellungen der Zuordnung der Umlenklichtleiter,
Figur 5 eine weitere mögliche Basiseinheit mit mehreren Lichtumlenkleitern (Figur 5a) und ein Ausführungsbeispiel der Leuchtvorrichtung mit mehreren Umlenklichtern auf einer Basis (Figur 5b).

Gleiche, gleichartige oder gleich wirkende Elemente sind in den Figuren mit gleichen Bezugszeichen versehen.

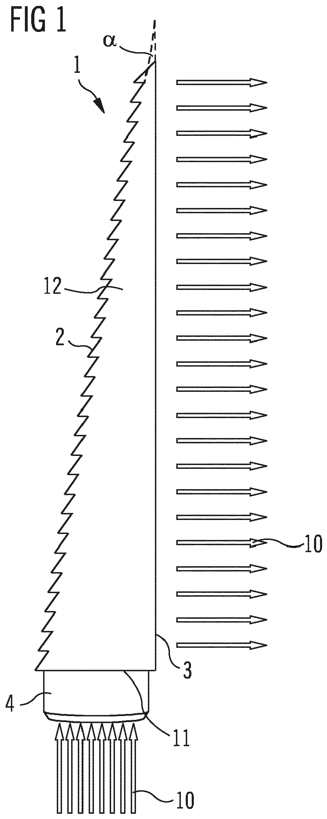

Figur 1 zeigt eine vorteilhafte Ausführungsform des Umlenklichtleiters 1 mit einer Reflexionsfläche 2, einer Lichtauskoppelfläche 3 und einer Optik 4. Die Reflexionsfläche überlappt mit der Optik 4 bevorzugt vollständig. Der Lichteintrittsbereich in den Hauptkörper 12 des Lichtleiters ist bevorzugt durch den mit der Optik überlappenden Bereich einer Lichteintrittsfläche 11 in den Hauptkörper 12 des Lichtleiters gebildet. Bei diesem Ausführungsbeispiel beträgt der Winkel zwischen der Haupteinfallsrichtung des Lichtes 10 und der Ausfallrichtung des Lichtes, insbesondere nach dem Durchtritt durch den Umlenklichtleiter, 90°, entsprechend dem Zwischenwinkel der Flächennormalen einer Lichteintrittsfläche 11 des Umlenklichtleiters und derjenigen der Lichtaustrittsfläche 3. In weiteren Ausführungsformen können auch andere Umlenkwinkel realisiert sein. Insbesondere können auch eine oder eine Mehrzahl von Lichtaustrittsflächen an der der Lichteintrittsfläche gegenüberliegenden Seite angeordnet sein, so dass ein Teil des Lichtes geradlinig, ohne Umlenkung den Lichtleiter passiert.

Die Reflexionsfläche 2 kann im wesentlichen zwei Funktionen erfüllen. Sie kann eine gleichmäßige Lichtverteilung im Lichtleiter 1 und damit eine homogene Auskopplung des Lichtes an der Lichtaustrittsfläche bewirken. Ebenfalls kann sie die gewünschte Lichtumlenkfunktion übernehmen. Dazu kann die Reflexionsfläche 2 verschiedenartig ausgeführt sein. Stufen, Rillen- und/oder Zackenmuster an der Oberfläche der Reflexionsfläche können sowohl eine Umlenkung des Lichtes etwa mittels Totalreflexion, als auch eine gleichmäßige Verteilung, insbesondere des austretenden Lichtstroms, bewirken. Alternativen zu einer Strukturierung der Reflexionsfläche bestehen in einer möglichen Metallisierung oder Verspiegelung der Oberfläche. Diese Methoden können auch auf einer strukturierten Oberfläche angewendet werden.

Die Neigung der Reflexionsfläche 2 bezüglich der Lichtaustrittsfläche 3 und der Abstand dieser beiden Flächen können ebenso zu einer gewünschten Lichtverteilung im Lichtleiter als auch zu einer homogenen Auskopplung beitragen. Hierzu ist der Neigungswinkel α bevorzugt kleiner als 45°, besonders bevorzugt kleiner als 25°, z.B. 20° oder weniger. Der Umlenklichtleiter ist ferner bevorzugt mit einer dreiecksartigen Grundform, gegebenenfalls mit einer abgeflachten Spitze, insbesondere nach Art eines rechtwinkligen Dreiecks, ausgeführt. Die Umlenkrichtung des Lichtes kann über den Abstand und die Neigung der Reflexionsflächen variiert werden.

Die Optik 4 beeinflusst das Einkoppelverhalten des Lichtes der Halbleiterlichtquelle 7. Die Optik 4 kann bezüglich des Hauptkörpers des Umlenklichtleiters 1 fest verbunden sein, z. B. einstückig oder geklebt, oder davon getrennt ausgeführt sein. Zur Realisierung einer Optik 4 können bekannte optisch wirksame Elemente oder Kombinationen aus diesen verwendet werden, insofern der gewünschte Umlenkeffekt zusammen mit der Reflexionsfläche 2 erreicht werden kann. In beispielhafter Weise können Optiken Bauelemente wie Linsen, diffraktive Optiken, Streulinsen, Prismenlinsen oder Kombinationen aus diesen enthalten. In einer bevorzugten Ausführungsform kann die Optik 4 eine kollimierende Optik sein, die paralleles Licht in den Lichtleiter einkoppelt.

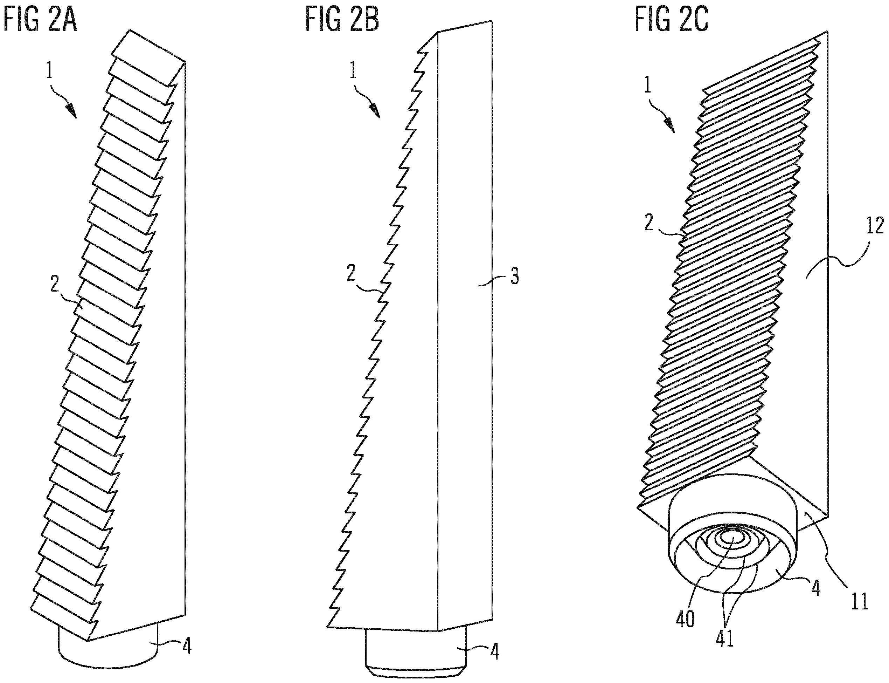

Figuren 2a bis 2c zeigen verschiedene perspektivische Ansichten einer bevorzugten Ausführungsform eines Umlenklichtleiters 1. An der Unterseite des Umlenklichtleiters 1 ist die Optik 4 angeordnet. Diese ist bevorzugt als rotationssymmetrische Stufenlinse mit einem lichteintrittseitig asphärisch, insbesondere von außen betrachtet konvex, gekrümmten Zentralbereich 40 und einer Mehrzahl von, vorzugsweise konfokal angeordneten oder als Kegelstumpfmantelflächen ausgebildeten, ringförmigen Reflektorflächen 41, die den Zentralbereich umlaufen, ausgeführt. Diese Elemente sind der Lichteintrittsfläche 11 in den Hauptkörper 12 des Umlenklichtleiters abgewandt (vgl. die Optik 4 aus Figur 2C). Eine Stufenlinse ist zur Parallelbündelung der von einer Halbleiterlichtquelle erzeugten Lichtstrahlen vor dem Eintritt in den Umlenklichtleiter besonders geeignet. Bei dieser speziellen Ausführungsform ist die Reflexionsfläche 2 mit einer Zackenstruktur oder einer geriffelten Struktur, insbesondere für Totalreflexion, versehen, die eine Reflexion des durch die Optik 4 eingekoppelten Lichtes auf die Lichtaustrittsfläche 3 ermöglicht. Die sich nach oben hin verjüngende Form des Umlenklichtleiters 1 ermöglicht hierbei im Zusammenhang mit der Struktur der Reflexionsfläche 2 eine im Wesentlichen gleichmäßige Lichtauskopplung über die gesamte Auskoppelfläche 3. Die Optik 4 ist in diesem Ausführungsbeispiel eine kollimierende Optik, die einstückig mit dem Umlenklichtleiter, z.B. zusammen mit dem Umlenklichtleiter gegossen, etwa spritzgegossen, ausgeführt ist.

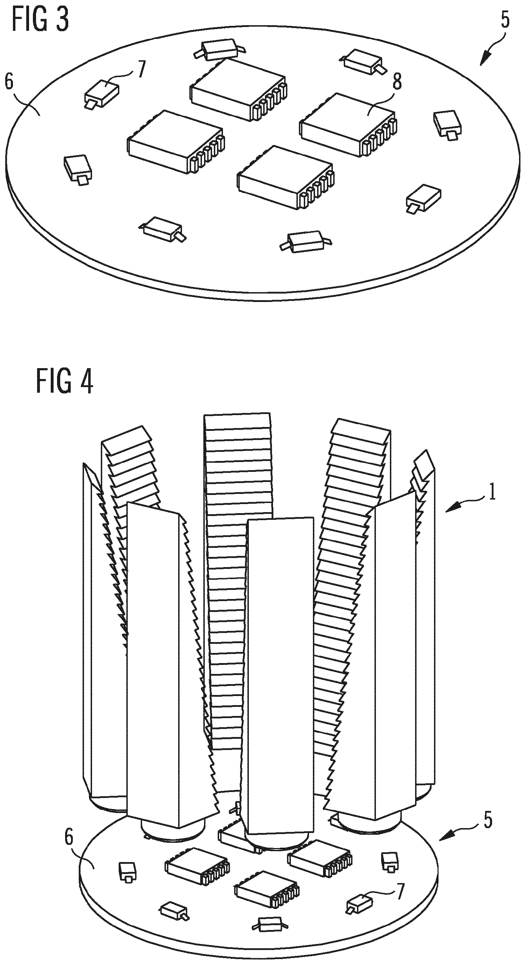

Figur 3 zeigt die Basis 5 einer erfindungsgemäßen Ausführungsform der Leuchtvorrichtung. Dabei sind mehrere Halbleiterlichtquellen 7, bevorzugt ein-, verschieden- oder mehrfarbige SMD-LED-Bauelemente, auf einem Träger 6 angeordnet und insbesondere auf diesem montiert. Zusätzlich ist auf demselben Träger mindestens ein integrierter Schaltkreis als Steuerung 8 für die LEDs angeordnet. In diesem Ausführungsbeispiel sind acht Halbleiterlichtquellen kreisförmig angeordnet. Bevorzugt ist der Träger in Aufsicht kreisförmig ausgebildet. Bei weiteren Ausführungsbeispielen können auch andere Anordnungen oder eine andere Anzahl von Halbleiterlichtquellen verwendet werden. Die Steuerung 8 der Halbleiterlichtquellen ist in diesem Ausführungsbeispiel durch vier integrierte Schaltkreise gelöst. Bei weiteren Ausführungsbeispielen kann auch eine andere Anzahl von integrierten Schaltkreisen auf dem Träger 6 verwendet werden. Die Steuerung 8 dient der Ansteuerung der Halbleiterbauelemente, kann aber in anderen Ausführungsbeispielen noch zusätzliche Funktionen, z.B. Dimmen des Lichts mittels pulsweitenmodulierender Ansteuerung der Lichtquellen (PWM: Pulsweitenmodulation), übernehmen.

Figur 4 zeigt schematisch eine erfindungsgemäße Ausführungsform der Leuchtvorrichtung in ihrem grundsätzlichen Aufbau. Dabei sind auf einer Basis 5 mehrere Halbleiterlichtquellen 7 auf einem Träger 6 angeordnet. Über der Basis 5 ist perspektivisch eine mögliche Anordnung für Umlenklichtleiter angedeutet. Durch das Zusammenwirken der Umlenklichtleiter 1 mit der Basis 5 kann eine Lichtabstrahlung von bis zu 360° um die Leuchtvorrichtung bezüglich der Flächennormalen der Basis 5, etwa in azimutaler Richtung zu dieser Flächennormalen, erreicht werden. In dieser Ausführungsform sind acht Halbleiterlichtquellen mit acht Umlenklichtleitern eingesetzt. Möglich ist jedoch auch die Verwendung einer davon verschiedenen Anzahl von Halbleiterlichtquellen und/oder Umlenklichtleitern in weiteren Ausführungsformen. Es können sowohl mehr als auch weniger Halbleiterlichtquellen Verwendung finden. Ebenso können mehr oder weniger Umlenklichtleiter vorgesehen sein, ohne dass die Zahl der Halbleiterlichtquellen mit der Zahl der Umlenklichtleiter korrelieren müsste. Denkbar sind insbesondere Ausführungsformen, bei denen mehr Lichtquellen als Umlenklichtleiter Verwendung finden, wobei beispielhaft das Licht verschiedener Halbleiterlichtquellen mit verschiedenfarbiger Emission in weniger Lichtleitern, insbesondere in einem gemeinsamen Lichtleiter, gemischt und abgestrahlt werden kann.

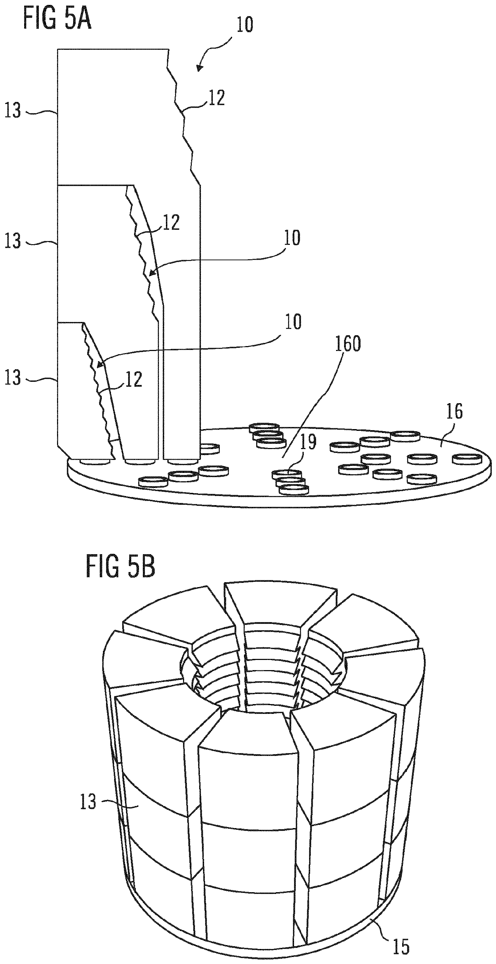

Figur 5a zeigt schematisch die Anordnung mehrerer Lichtleiter 10 mit Lichtauskoppelflächen 13 und Reflexionsflächen 12 für eine weitere Ausführungsform anhand einer bereichsweisen Teilschnittansicht durch Figur 5b. Dabei sind auf einem gemeinsamen Träger 16 mehrere Halbleiterlichtquellen, bevorzugt mit zugeordneten Optiken 19, radial von einem Zentralbereich 160 des Trägers 16 ausgehend nebeneinander angeordnet. Die Lichtquellen können sternförmig oder strahlenartig auf dem Träger angeordnet sein. Diesen Lichtquellen mit Optiken 19 wird jeweils ein separater Lichtleiter zugeordnet. Bei dieser Ausführungsform befinden sich die Lichtauskoppelflächen 13 verschiedener Umlenklichtleiter übereinander angeordnet, wobei die einzelnen Umlenklichtleiter einander überlappen und zur Aufeinanderanordnung oder -befestigung geeignet abgeflacht sind. Die Lichtaustrittsflächen 13 verschiedener Umlenklichtleiter schließen vorzugsweise bündig miteinander ab. Zusätzlich wird das Licht verschiedener Lichtquellen jeweils getrennt in einen zugeordneten Umlenklichtleiter eingekoppelt. Dadurch lassen sich in diesem Ausführungsbeispiel, insbesondere gleichzeitig, mehrfarbige Signale mittels der Leuchtvorrichtung realisieren. Die Optik 19 kann gegebenenfalls auch an dem jeweiligen Lichtleiter befestigt oder einstückig mit diesem ausgeführt sein. Weiterhin sind die Reflexionsflächen jeweils von außen betrachtet konkav und die Lichtaustrittsflächen 13 konvex gekrümmt ausgeführt.

Eine vorteilhafte Weiterbildung besteht darin, dass die Optiken mit den Halbleiterlichtquellen fest verbunden sind und eine zusätzliche Optik an der Lichteintrittsfläche des Umlenklichtleiters dadurch entfällt. Auch in diesem Ausführungsbeispiel können zusätzliche Steuerungselemente auf dem Träger 16 angeordnet werden. Dabei kann durch die Verwendung verschiedenfarbiger Halbleiterlichtquellen beispielsweise eine Art Ampelsignaleffekt mit den drei übereinanderliegenden Lichtauskoppelflächen 13 erreicht werden.

Die Neigungswinkel der Reflexionsfläche gegen die Lichtaustrittsfläche des jeweiligen Umlenklichtleiters sind bevorzugt kleiner 45°, besonders bevorzugt kleiner 25°, z.B. 20° oder weniger. Weiterhin sind die Neigungswinkel für verschiedene Umlenklichtleitern, deren Lichtaustrittsflächen übereinander angeordnet sind, vorzugsweise gleich.

Figur 5b zeigt perspektivisch eine komplette Leuchtvorrichtung gemäß dem Ausführungsbeispiel 5a. Dabei sind acht Umlenklichtleiteranordnungen wie sie in Figur 5a schematisch dargestellt sind, kreisförmig auf einer Basis 15 angeordnet. In einem Abstrahlwinkelbereich liegen jeweils drei Lichtauskoppelflächen 13 übereinander. In weiteren Ausführungsformen können sowohl weniger als auch mehr Lichtauskoppelflächen übereinander angeordnet werden, um verschiedene, auch verschiedenfarbige Signalzustände erzielen zu können.

Diese Patentanmeldung beansprucht die Priorität der deutschen Patentanmeldung DE 10 2004 063 574.9 vom 30. Dezember 2004, deren gesamter Offenbarungsgehalt hiermit explizit durch Rückbezug in die vorliegende Patentanmeldung aufgenommen wird.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

### Bezugszeichenliste

- 1: Umlenklichtleiter
- 2, 12: Reflektorfläche
- 3, 13: Lichtauskoppelfläche
- 4: Optik
- 5, 15: Basis
- 6, 16: Träger
- 7: Halbleiterlichtquellen
- 8: Steuerung
- 19: Halbleiterlichtquelle mit Optik
- 10: Licht
- 11: Lichteintrittsfläche
- 12: Hauptkörper
- 40: Zentralbereich
- 41: Reflektorring
- 160: Zentralbereich

## Patentansprüche

1. Leuchtvorrichtung mit mehreren Halbleiterlichtquellen, die auf einem Träger angeordnet sind und mit Umlenkoptiken, wobei das Licht der Lichtquellen jeweils in eine zugeordnete Umlenkoptik einkoppelt und die Umlenkoptiken mit Reflexions- und Lichtaustrittsflächen versehen sind, derart, dass die Einhüllende der Lichtauskoppelflächen ein gekrümmtes Flächensegment bildet.

2. Vorrichtung nach Anspruch 1,
**dadurch gekennzeichnet, dass**
jeder Umlenkoptik genau eine Halbleiterlichtquelle zugeordnet ist.

3. Vorrichtung nach einem der vorangegangen Ansprüche
**dadurch gekennzeichnet, dass**
sich die Umlenkoptiken jeweils vom Träger weg verjüngen.

4. Vorrichtung nach einem der vorangegangenen Ansprüche
**dadurch gekennzeichnet, dass**
die Einhüllende der Lichtaustrittsflächen bezüglich der Lichtaustrittsrichtung ein nach außen gekrümmtes Flächensegment ist.

5. Vorrichtung nach einem der vorangegangenen Ansprüche
**dadurch gekennzeichnet, dass**
einer Lichteinkoppelungsfläche eines der Umlenkoptiken eine kollimierende Optik zugeordnet ist, die einstückig mit der Umlenkoptik ausgeführt ist.

6. Vorrichtung nach einem der vorangegangenen Ansprüche
**dadurch gekennzeichnet, dass**
die Lichtaustrittsflächen und die Reflexionsflächen in ihrem grundsätzlichen Verlauf eben ausgeführt sind.

7. Vorrichtung nach einem der Ansprüche 1 bis 5,
**dadurch gekennzeichnet, dass**
von außerhalb der Umlenkoptiken gesehen die Lichtaustrittsflächen konvex gekrümmt und die Reflexionsflächen konkav gekrümmt ausgeführt sind.

8. Vorrichtung nach einem der vorangegangenen Ansprüche
**dadurch gekennzeichnet, dass**
die Reflexionsflächen über eine Strukturierung für aus Richtung der zugeordneten Halbleiterlichtquelle auftreffendes Licht totalreflektierend ausgebildet ist.

9. Vorrichtung nach einem der vorangegangenen Ansprüche
**dadurch gekennzeichnet, dass**
die Vorrichtung in einer Wanne angeordnet ist, die zusammen mit einer transparenten Abdeckung ein Gehäuse bildet.

10. Vorrichtung nach einem der vorangegangenen Ansprüche
**dadurch gekennzeichnet, dass**
die Vorrichtung nach der Montage in einem Gehäuse vergossen oder verschlossen ist.

11. Vorrichtung nach einem der vorangegangenen Ansprüche
**dadurch gekennzeichnet, dass**
in der Vorrichtung MultiLEDs oder verschiedenfarbige LEDs angeordnet sind und das Licht verschiedenfarbiger Lichtquellen im Lichtleiter gemischt ist.

12. Vorrichtung nach einem der vorangegangenen Ansprüche
**dadurch gekennzeichnet, dass**
die Vorrichtung eine Ansteuerung der Halbleiterlichtquellen enthält, welche Blink- oder Rotationseffekte erzeugt.

13. Vorrichtung nach einem der vorangegangenen Ansprüche
**dadurch gekennzeichnet, dass**
der Lichtleiter ein Wellenlängen konvertierendes Material enthält.

14. Vorrichtung nach einem der vorangegangenen Ansprüche,
**dadurch gekennzeichnet, dass**
eine Lichtaustrittsfläche (13) einer ersten Umlenkoptik (10) vom Träger (16) aus gesehen oberhalb einer Lichtaustrittsfläche (13) einer zweiten Umlenkoptik (10) angeordnet ist, wobei die zweite Umlenkoptik (10) einer Halbleiterlichtquelle (7) zugeordnet ist, die näher an einem Rand des Trägers (16) angeordnet ist als eine Halbleiterlichtquelle (7), der die erste Umlenkoptik (10) zugeordnet ist.

15. Signalleuchte mit einer Leuchtvorrichtung gemäß einem der vorangegangenen Ansprüche.
